Europäisches Patentamt

European Patent Office

Office européen des brevets

(19)

(11) Numéro de publication: **0 426 559 A1**

## (12) DEMANDE DE BREVET EUROPEEN

(21) Numéro de dépôt: 90403070.7

(22) Date de dépôt: 30.10.90

(51) Int. Cl.⁵: **G01N 21/41, G02B 27/56**

(30) Priorité: 31.10.89 FR 8914289

(43) Date de publication de la demande:
08.05.91 Bulletin 91/19

(84) Etats contractants désignés:
AT BE CH DE DK ES FR GB GR IT LI LU NL SE

(71) Demandeur: **SPIRAL - RECHERCHE ET DEVELOPPEMENT (SARL)**
**3, rue des Mardors**
**F-21560 Couternon(FR)**

(72) Inventeur: **de Fornel, Frédérique**
**16, rue du Recteur Bouchard**
**F-21000 Dijon(FR)**
Inventeur: **Goudonnet, Jean-Pierre**
**12F, rue Isabelle du Portugal**
**F-21000 Dijon(FR)**

(74) Mandataire: **Bruder, Michel et al**
**Cabinet Michel Bruder Conseil en Brevets**
**10, rue de la Pépinière**
**F-75008 Paris(FR)**

(54) **Spectroscopie discriminante du profil optique d'un objet transparent, obtenu par microscopie optique a balayage en champ evanescent frustre.**

(57) La présente invention concerne un procédé de spectroscopie discriminante destinée à la microscopie optique à balayage en champ évanescent frustré, du type permettant d'obtenir le profil optique "normal" d'un objet transparent, caractérisé en ce qu'on provoque une variation préférérentiellement différentielle de l'une au moins des grandeurs physiques dont l'intensité I du champ évanescent frustré dépend, à savoir :
- la longueur d'onde $\lambda$ du rayonnement électromagnétique, orienté sur le dessous d'une face d'un corps transparent, du type d'un prisme, et qui génère, par réflexion interne totale, ledit champ proche,
- l'indice de réfraction optique n1 dudit corps transparent,
- l'indice de réfraction optique moyen n2 de l'objet transparent placé sur le dessus de ladite face,
- et l'angle d'incidence $\theta$ dudit rayonnement électromagnétique sur ladite face,
de manière à obtenir une variation concomitante dI de ladite intensité I, susceptible d'être interprétée comme un profil optique "différentiel" dudit objet transparent par rapport à l'une au moins desdites grandeurs physiques, ou procurant un profil optique "modifié" dudit profil optique "normal" de cet objet.

EP 0 426 559 A1

*Fig 2*

La présente invention concerne un procédé de spectroscopie discriminante destiné à la microscopie optique à balayage en champ évanescent frustré, du type permettant d'établir le profil optique d'un objet transparent, ainsi qu'un ensemble de microscopes optiques à balayage en champ évanescent frustré mettant en oeuvre ledit procédé.

On connait un certain nombre de procédés de microscopie optique permettant de déterminer avec une bonne précision le profil optique d'un objet transparent ; ce profil optique est une fonction du produit de l'indice de réfraction et de l'épaisseur en chaque point de l'objet.

Parmi ces procédés, les qualités de la microscopie à contraste interférentiel sont bien connues : simplicité de mise en oeuvre, obtention d'images très précises, et possibilité d'obtenir un profil optique "différentiel", c'est-à-dire proportionnel à la première dérivée du profil optique "normal". Néanmoins, la résolution des microscopes optiques à contraste interférentiel est directement liée à la résolution des microscopes optiques conventionnels dont ils constituent des variantes directes. Cette résolution est donc limitée par les phénomènes de diffraction touchant tous les instruments optiques sans distinction : au mieux, un microscope optique conventionnel travaillant dans l'ultraviolet peut résoudre des géométries avec une précision limitée à environ 100 nanomètres. En outre, de par son principe basé sur l'obtention de franges d'interférences le plus contrastées possible, la microscopie à contraste interférentiel est très sensible aux interférences parasites, et notamment à celles pouvant résulter du passage de la lumière au travers du corps transparent soumis à l'étude. En particulier, si ce corps présente une structure lamellaire, il peut apparaître des interférences à plusieurs ondes dues à des réflexions multiples à l'intérieur dudit corps.

La microscopie optique à balayage en champ évanescent frustré ne présente pas les inconvénients précédemment mentionnés des microscopes à contraste interférentiel. Il s'agit d'un nouveau type de microscopie optique découvert récemment ; on en trouve un exposé dans un article en langue anglaise, paru le 1er janvier 1989 dans Physical Review B, Volume 39, number 1, pages 767-770. Cet article a pour titre : "New form of scanning optical microscopy". La résolution latérale peut atteindre 10 nanomètres, soit une amélioration d'un facteur dix par rapport à la résolution obtenue en microscopie optique conventionnelle.

Il est maintenant rappelé le principe de cette microscopie :
- On dirige un faisceau de lumière monochromatique sur le dessous d'une face d'un corps transparent, par exemple un prisme (on entend par "corps transparent" un corps transparent dans le domaine spectral considéré). L'angle d'incidence $\theta$ de ce faisceau est choisi supérieur à l'angle critique $\theta_c$ caractérisant l'interface entre ce corps transparent, d'indice de réfraction optique n1, et le milieu extérieur, d'indice de réfraction optique moyen n2 ; de cette manière, le faisceau lumineux subit une réflexion interne totale, et génère, sur le dessus de ladite face, un champ évanescent, dont on sait qu'il transporte une énergie moyenne nulle dans le temps.
- Une pointe fine transparente, du type de l'extrémité amincie d'une fibre optique, est déplacée au dessus de la face où se produit la réflexion totale du faisceau de lumière, de manière à se trouver dans le champ évanescent ; une onde électromagnétique d'énergie moyenne non nulle peut alors passer du corps transparent vers ladite pointe, et être détectée à l'extrémité opposée de la fibre optique. Il est habituel de dire que la pointe vient "frustrer" le champ évanescent, et de parler de ce champ comme d'un champ évanescent frustré. Or, l'intensité de ce champ varie exponentiellement avec la distance séparant la pointe de la face du prisme ; on peut donc, soit effectuer une mesure très précise de cette distance par extrapolation directe de l'intensité détectée, soit maintenir la pointe à une distance constante de ladite face en opérant à intensité constante.
- Le front de l'onde évanescente est sensiblement celui d'une onde plane. Un objet transparent placé dans le champ évanescent frustré, c'est-à-dire sur la face où se produit la réflexion totale du faisceau de lumière, va modifier en chaque point le front de l'onde évanescente transmise à la pointe ; les chemins optiques ponctuels de l'objet, correspondant aux produits de son épaisseur et de son indice de réfraction ponctuels, modulent ainsi spatialement le champ évanescent frustré (on entend par "objet transparent" un objet transparent dans le domaine spectral considéré).
- En faisant alors balayer latéralement l'objet transparent par cette pointe - dont les mouvements dans les trois directions de l'espace sont enregistrés -, on établit son profil optique (image des chemins optiques ponctuels). En raison de la finesse de la pointe transparente (100 nanomètres), les résolutions latérale et verticale de cette image peuvent atteindre quelques dizaines de nanomètres, voire moins.

Cependant, on comprend bien que dans une telle microscopie, les images d'un objet transparent ne sont significatives qu'à la condition que celui-ci soit homogène, ou d'épaisseur constante. En effet, le profil optique d'un objet dépend de deux paramètres, qui sont son épaisseur et son indice de réfraction optique ; une seule mesure liant ces deux paramètres est donc insuffisante pour pouvoir discriminer la part de l'un et la part de l'autre.

C'est la raison pour laquelle, en l'état, un microscope optique à balayage en champ évanescent frustré procure ainsi des images d'un objet hétérogène d'épaisseur variable, tel que, par exemple, un échantillon biologique, qui sont insusceptibles d'être interprétées correctement.

La présente invention vise à remédier à ces inconvénients, en proposant un procédé de spectroscopie discriminante destinée à la microscopie optique à balayage en champ évanescent frustré, du type permettant d'obtenir le profil optique "normal" d'un objet transparent, caractérisé en ce qu'on provoque une variation préférérentiellement différentielle de l'une au moins des grandeurs physiques dont l'intensité du champ évanescent frustré dépend, à savoir :

- la longueur d'onde $\lambda$ du rayonnement électromagnétique, orienté sur le dessous d'une face d'un corps transparent, du type d'un prisme, et qui génère, par réflexion interne totale, ledit champ proche,
- l'indice de réfraction optique n1 dudit corps transparent,
- l'indice de réfraction optique moyen n2 de l'objet transparent placé sur le dessus de ladite face,
- et l'angle d'incidence $\theta$ dudit rayonnement électromagnétique sur ladite face,

de manière à obtenir une variation concomitante de ladite intensité, susceptible d'être interprétée comme un profil optique "différentiel" dudit objet transparent par rapport à l'une au moins desdites grandeurs physiques, ou procurant un profil optique "modifié" dudit profil optique "normal" de cet objet.

De cette façon, lors du balayage du corps transparent par la pointe transparente, on recueille un signal d'intensité composite formé par la superposition, qu'on peut estimer être suffisamment linéaire, de deux signaux. Ceux-ci sont représentatifs :

- pour l'un, de l'intensité moyenne ponctuelle du champ évanescent frustré après qu'il ait traversé l'objet transparent,
- pour l'autre, de la variation de cette intensité moyenne ponctuelle, en réponse à la variation préférentiellement différentielle de l'une des grandeurs physiques susmentionnées.

Or, dans l'utilisation la plus avantageuse d'un microscope optique à balayage en champ évanescent frustré, on relève le profil optique "normal" d'un objet transparent en opérant à intensité constante, de manière à maintenir la pointe fine transparente à une distance constante de la surface de cet objet ; ce fonctionnement à intensité constante est obtenu au moyen d'un dispositif d'asservissement de la position verticale de la pointe contrôlant, par contre-réaction, ladite intensité. Conformément aux dispositions de la présente invention, seule l'intensité moyenne ponctuelle du champ évanescent frustré est concernée par cette contre-réaction, sa variation, différentielle ou non, étant supprimée par filtrage ou moyennage.

Deux situations peuvent alors se présenter :

a) La variation de l'une des grandeurs physiques dont l'intensité du champ évanescent frustré dépend n'est pas différentielle, c'est-à-dire qu'il s'agit d'une variation ne pouvant pas être assimilée à un accroissement infiniment petit de la grandeur physique concernée.

b) La variation de l'une des grandeurs physiques dont l'intensité du champ évanescent frustré dépend est différentielle, c'est-à-dire qu'il s'agit d'une variation pouvant être assimilée à un accroissement infiniment petit de la grandeur physique concernée.

Dans le premier cas (a), on obtient simultanément deux images de l'objet transparent soumis à l'étude. En effet, la variation de la grandeur physique, bien qu'elle ne soit pas de faible amplitude, peut être rapide, et permettre, durant un même balayage, :

- d'une part, par le procédé microscopique habituel, de relever un profil optique de l'objet transparent correspondant à une première valeur de ladite grandeur physique,
- d'autre part, de relever simultanément - sans plus bouger la pointe fine transparente, dont les mouvements sont asservis par le procédé microscopique précédent -l'intensité correspondant à une deuxième valeur de cette même grandeur physique. A partir de cette deuxième intensité relevée ponctuellement, on peut extrapoler une valeur du chemin optique séparant la pointe de la surface de l'objet transparent, et en déduire un second profil optique dudit objet transparent.

La comparaison des deux images obtenues permet alors d'en extraire les épaisseurs et les indices de réfraction ponctuels de cet objet.

Dans le second cas (b), on peut associer la variation concomitante de l'intensité I du champ évanescent frustré à une intensité différentielle dI pouvant s'écrire, si on note par G une grandeur physique dont dépend l'intensité I :

(i)

$$dI = (dI/dG) \times dG$$

Mesurant l'intensité différentielle dI, et connaissant généralement la valeur de la variation différentielle dG (variation que l'on provoque), il est immédiat d'obtenir la valeur (dI/dG) de la première dérivée de l'intensité I par rapport à la grandeur physique G.

Au cours du balayage de la surface de l'objet transparent par la pointe fine transparente, on peut donc déterminer :

- d'une part, le profil optique "normal" de cet objet, donné par l'intensité moyenne ponctuelle I du champ évanescent frustré modifié par ledit objet,
- d'autre part, son profil optique "différentiel", donné par l'intensité différentielle dI ou la dérivée première (dI/dG).

De plus, aussi bien I que (dI/dG) peuvent être formellement calculés en fonction des grandeurs physiques G. La connaissance expérimentale de deux profils optiques, l'un "normal" et l'autre "différentiel", de l'objet transparent à étudier, procure le moyen de discriminer ponctuellement la part de l'épaisseur et la part de l'indice de réfraction optique dans ces profils optiques expérimentaux.

On comprend donc qu'il devient possible de connaître d'une part, la topographie géomètrique exacte, d'autre part, la cartographie des propriétés optiques, des objets transparents hétérogènes ; en effet, il est très probable que les composants d'un objet de cette sorte présentent des indices de réfraction optiques dissemblables, que les deux images obtenues permettent de discerner.

De manière avantageuse, il est par ailleurs possible d'établir plusieurs profils optiques "différentiels" d'un objet transparent, à partir de variations différentielles successives d'une grandeur physique G puis de l'autre. On élimine ainsi de manière très efficace tous les artefacts de mesure, sans préjudice sur la résolution, et/ou on fait apparaitre de nouvelles structures de cet objet.

De même, si les variations des grandeurs physiques G ne sont pas différentielles, on peut procéder à plusieurs déterminations successives de profils optiques "normaux", et les interpréter corrélativement les uns par rapport aux autres.

D'autres caractéristiques et avantages du procédé de spectroscopie objet de la présente invention ressortiront mieux de la description qui va suivre de plusieurs formes d'éxécution données à titre d'exemples non limitatifs d'un microscope optique à balayage en champ évanescent frustré mettant en oeuvre ledit procédé, en référence aux dessins annexés sur lesquels :

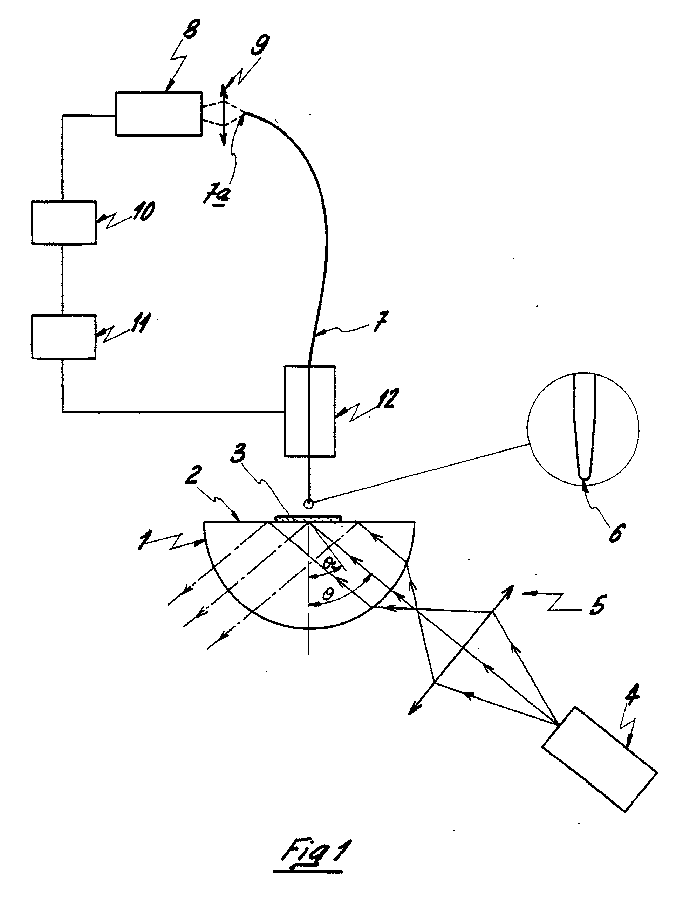

- la figure 1 est une vue schématique d'un microscope optique à balayage en champ évanescent frustré conventionnel,

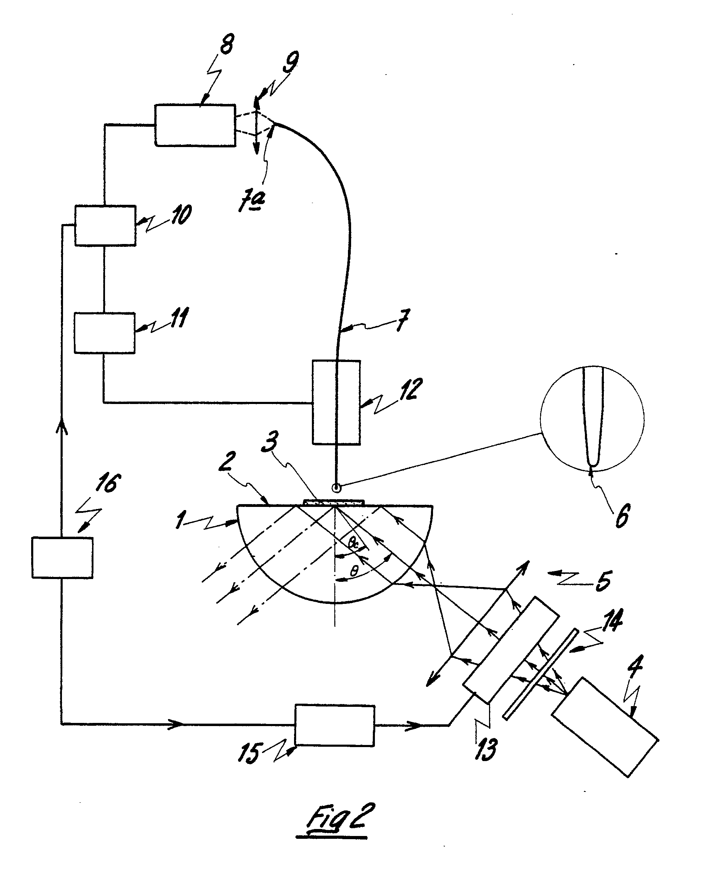

- la figure 2 est une vue schématique d'une première forme d'éxécution d'un microscope optique à balayage en champ évanescent frustré, mettant en oeuvre le procédé de spectroscopie objet de l'invention, et comportant notamment un dispositif modulateur de longueur d'onde,

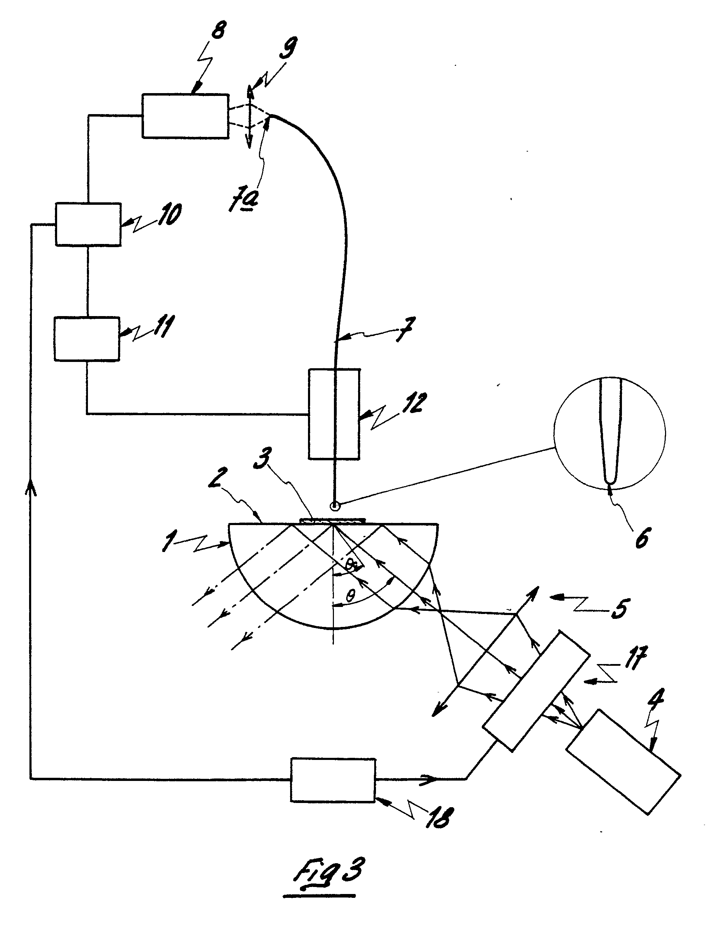

- la figure 3 est une vue schématique d'une deuxième forme d'éxécution d'un microscope optique à balayage en champ évanescent frustré, mettant en oeuvre le procédé de spectroscopie objet de l'invention, et comportant notamment un dispositif de polarisation de la lumière, destiné à stimuler, le cas échéant, la biréfringence naturelle des composants d'un objet transparent hétérogène soumis à l'étude,

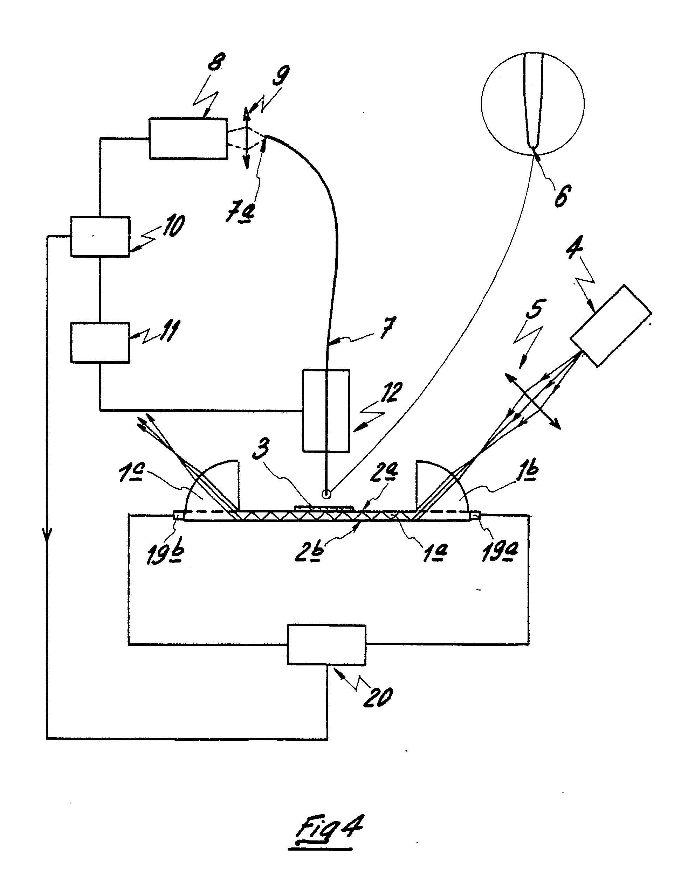

- la figure 4 est une vue schématique d'une troisième forme d'éxécution d'un microscope optique à balayage en champ évanescent frustré, mettant en oeuvre le procédé de spectroscopie objet de l'invention, et comportant notamment un dispositif électrooptique destiné à induire une biréfringence à la superficie, ou dans la masse, du corps transparent dont une face sert à disposer l'objet transparent soumis à l'étude,

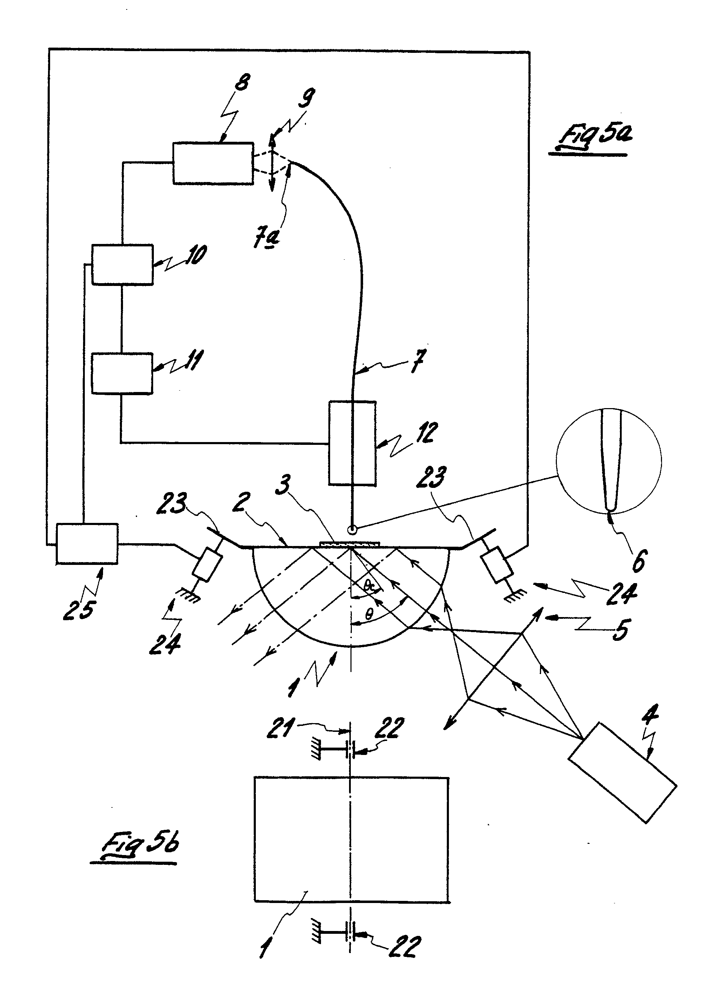

- la figure 5a est une vue schématique d'une quatrième forme d'éxécution d'un microscope optique à balayage en champ évanescent frustré, mettant en oeuvre le procédé de spectroscopie objet de l'invention, et comportant notamment un dispositif de basculement autour d'un axe horizontal du corps transparent dont une face sert à disposer l'objet transparent soumis à l'étude, de manière à générer une variation différentielle de l'angle d'incidence $\theta$ du rayonnement électromagnétique sur ladite face,
- la figure 5b est une vue partielle de dessus du dispositif de basculement du corps transparent représenté sur la figure 5a .

Sur ces figures, des éléments identiques entrant dans chaque variante sont systématiquement référencés à l'aide des mêmes numéros. Par ailleurs, les figures étant des schémas fonctionnels, les proportions des éléments entre eux ne sont pas respectées.

Conformément à la figure 1, il est décrit tout d'abord un microscope optique à balayage en champ évanescent frustré conventionnel. Celui-ci comporte :

- un corps transparent 1, du type d'un prisme hémicylindrique, ou hémisphérique, présentant au moins une face 2 horizontale de manière à pouvoir supporter un objet transparent 3 dont on veut relever un profil optique. Pour une bonne observation, il est conventionnel d'intercaler un liquide d'indice (ou adaptateur d'indice) entre la face 2 et l'objet 3.

- une source 4 de rayonnement électromagnétique, favorablement monochromatique, du type par exemple d'un laser hélium-néon ou d'un laser à argon. Le faisceau lumineux issu de cette source 4 est orienté sur le dessous de la face 2 suivant un angle $\theta$ au moins supérieur à un angle $\theta_c$ pour lequel il se produit une réflexion totale dudit faisceau. L'angle critique $\theta_c$ est donné en fonction de l'indice de réfraction optique n1 du corps transparent 1 et de l'indice de réfraction optique moyen n2 du milieu se trouvant en contact immédiat avec le dessus de la face 2 (n2 étant inférieur à n1), conformément à la formule :

$$\theta_c = \arcsin(n2/n1)$$

- un dispositif optique convergent, du type d'une lentille convergente 5, qui permet de faire converger le faisceau lumineux issu de la source 4 avant son entrée dans le corps transparent 1 lorsque celui-ci est un prisme hémicylindrique, dont on sait qu'il est convergent, et qu'il est nécessaire ,par ailleurs, d'obtenir un faisceau lumineux parallèle en incidence sur la face 2. En outre, le diamètre du faisceau est suffisant pour illuminer la quasi-totalité de la surface de la face 2.

- une pointe fine transparente 6 maintenue à proximité de la face 2. Cette pointe 6 est constituée de l'extrémité amincie d'une fibre optique 7. Du fait de la réflexion interne totale du faisceau lumineux à l'intérieur du corps transparent 1, il existe un champ électromagnétique évanescent sur le dessus de la face 2 dans le milieu d'indice de réfraction optique moyen n2 ; ainsi qu'on l'a expliqué plus haut, la pointe 6 vient "frustrer" ce champ évanescent, dont l'intensité représente de manière très précise la distance séparant l'extrémité de la pointe du lieu où s'est produit la réflexion totale de la lumière incidente.

- un photodétecteur 8, précédé éventuellement d'un photomultiplicateur non représenté sur la figure 1, chargé de mesurer l'intensité du champ évanescent frustré, prélevé par la pointe 6, et qui s'est propagé dans la fibre optique 7 jusqu'à son extrémité 7a pour être couplé au photodétecteur 8 au d'un dispositif optique 9 approprié.

- un ordinateur 10, muni des interfaces de mesure nécessaires non représentées sur la figure 1, apte à enregistrer et traiter la valeur de l'intensité transmise par le photodétecteur 8. Dans le cas le plus favorable à l'obtention d'images précises de l'objet transparent 3, un circuit de contre-réaction 11, relié à l'ordinateur 10, assure la comparaison entre la valeur de cette intensité et une valeur de consigne, de manière à réagir, par l'intermédiaire d'un tube piezo-électrique 12, sur la position verticale de la pointe 6, suite à l'écart des deux valeurs ; ce contrôle est très sensible en raison de la décroissance exponentielle du champ évanescent frustré en fonction de la distance de la pointe 6 à la surface émettrice de ce champ.

Par ailleurs, l'ordinateur 10, par l'intermédiaire du circuit de contre-réaction 11, contrôle le balayage latéral de la pointe 6 au-dessus de la face 2 et de l'objet transparent 3. Pour ce faire, il est usuel d'utiliser un tube piezo-électrique 12 à quadrants, part exemple réalisé dans un matériau peu sensible aux dilatations thermiques du type PZT (5H). L'enregistrement par l'ordinateur 10 des déplacements de la pointe 6 lui permet d'établir le profil optique "normal' de l'objet transparent 3.

Il est maintenant décrit, en référence à la figure 2, une première forme d'éxécution d'un microscope optique à balayage en champ évanescent frustré, mettant en oeuvre le procédé de spectroscopie discriminante objet de la présente invention.

Afin d'obtenir une variation préférentiellement différentielle dλ de la longueur d'onde λ du rayonnement électromagnétique émis par la source 4, on intercale un modulateur de longueur d'onde 13 entre la sortie de ladite source 4 et l'entrée du corps transparent 1. Dans le cas présent, on a choisi de faire précéder la lentille convergente 5 par ce modulateur 13. Celui-ci met en oeuvre, de façon connue, un cristal électrooptique du type d'un monocristal d'ammonium dihydrogéné, dit ADP, soumis à un champ électrique alternatif suivant un de ses axes principaux (effet Pockels). Un polariseur 14 est placé devant le modulateur 13, de manière à polariser linéairement le rayonnement électromagnétique issu de la source 4, et à constituer, avec le modulateur 13, un modulateur de phase et de fréquence pour ledit rayonnement. On peut ainsi, avec un bon rendement, faire varier facilement de plus ou moins 10% la longueur d'onde λ (ou la fréquence) de ce rayonnement. On peut obtenir cet effet dans tout le domaine spectral du visible, et, en particulier, pour le rayonnement émis par un laser hélium-néon, ou un laser à argon.

Une alimentation électrique 15 assure le fonctionnement du modulateur 13. La rapidité de la variation dλ de la lonqueur d'onde λ obtenue au moyen des dispositifs 13, 14 et 15 précédemment mentionnés dépend directement de la tension alternative délivrée par cette alimentation électrique 15.

En outre, un circuit auxilliaire 16, relié à l'ordinateur 10, prélève un échantillon de cette tension alternative, représentative de la variation dλ de la longueur d'onde λ ; l'ordinateur 10 se charge alors d'enregistrer et de traiter cette information.

La variation différentielle dλ produit une modulation différentielle simultanée dI de l'intensité du champ évanescent frustré produit par la réflexion interne totale, dans le corps transparent 1, du rayonnement électromagnétique issu de la source 4. Cette modulation dI vient se superposer à l'intensité moyenne ponctuelle I dudit champ évanescent frustré. Conformément à l'invention, seule cette intensité moyenne ponctuelle est utilisée par le circuit de contre-réaction 11 pour asservir le mouvement vertical de la pointe fine transparente 6.

La modulation dI est simplement enregistrée par l'ordinateur 10, qui la traite simultanément, ou postérieurement au balayage, en combinaison avec la mesure sus-mentionnée d'un échantillon de la tension délivrée par l'alimentation électrique 15. Ce traitement consiste à déterminer la quantité dérivée (dI/dλ), ou son équivalent, et à établir, par conséquent, un profil optique "différentiel" de la substance transparente 3.

Ceci justifie totalement que le procédé selon l'invention soit dénommé "spectroscopie" : la détermination de la quantité dérivée (dI/dλ) constitue, en effet, une analyse spectroscopique en termes de traitement du signal.

Après avoir réalisé deux images, ou deux profils optiques différents, d'un même objet transparent 3, l'ordinateur 10 détermine ponctuellement les épaisseurs et les indices de réfraction de cet objet 3.

Des objets transparents 3 hétérogènes, du type des échantillons biologiques, ont été analysés par cette technique ; en particulier, on a obtenu d'excellentes images de petites particules de chyle (chylomicron), avec une résolution latérale de 50 nanomètres et une résolution verticale de 20 nanomètres.

Il est décrit maintenant, en référence à la figure 3, une deuxième forme d'éxécution d'un microscope optique à balayage en champ évanescent frustré mettant en oeuvre le procédé de spectroscopie discriminante, objet de la présente invention.

Dans cette variante, on modifie l'indice de réfraction optique moyen n2 de l'objet transparent 3, ou les indices de réfraction optique de ses différents composants, par stimulation, si elle existe, de leur biréfringence naturelle.

Pour ce faire, comme la biréfringence d'un milieu tend à séparer les polarisations composant un rayonnement électromagnétique le traversant, on a choisi de polariser linéairement le rayonnement électromagnétique issu de la source 4 au moyen d'un dispositif polarisant 17. Ce dispositif 17 est intercalé entre la source 4 et la lentille convergente 5.

En outre, conformément à l'invention, il peut, de manière connue non décrite ici, faire tourner rapidement la polarisation du rayonnement électromagnétique le traversant (des dispositifs polarisants de ce genre sont connus en ellipsométrie). Cette variation de la polarisation est contrôlée par un dispositif électronique annexe 18, relié à l'ordinateur 10 qui l'enregistre et la traite. La polarisation du champ évanescent, résultant de la réflexion interne totale de ce rayonnement dans le corps transparent 1, varie simultanément avec la polarisation dudit rayonnement.

Le cas échéant, si l'objet transparent 3, ou quelques uns au moins de ses composants, sont biréfringents, l'indice de réfraction moyen n2 va suivre directement la polarisation variable imposée par le dispositif polarisant 17.

Or, la variation relative de l'indice de réfraction d'un milieu est pratiquement toujours très faible (sa variation absolue concerne souvent le troisième chiffre significatif de la valeur numérique de l'indice). On peut donc assimiler avec une bonne certitude la variation de l'indice de réfraction n2 de l'objet transparent 3, ou les variations des indices de réfraction de ses composants, à des variations différentielles. On a de cette façon pu observer une variation différentielle dI de l'intensité I du champ évanescent frustré ayant traversé certains objets transparents 3, tels des micro-organismes.

Lorsque, par contre, le milieu traversé par le champ évanescent frustré n'est pas biréfringent, l'intensité I n'est pas modulée et il n'existe aucune modulation dI superposée à I.

L'image différentielle obtenue à partir du traitement de l'enregistrement ponctuel de l'intensité I présente donc parfois des zones sombres, qui correspondent aux zones non biréfringentes de l'objet transparent 3 étudié.

On notera enfin que la variation de la polarisation due au dispositif polarisant 17 n'est pas une variation différentielle, contrairement à celles de l'indice de réfraction optique moyen n2 de l'objet transparent 3, ou des indices de réfraction de ses composants. Il convient donc d'interpréter en soi la modulation d'intensité dI enregistrée lors du balayage, plutôt que d'établir la quantité dérivée (dI/dn2), dont on ne connait pas ponctuellement le terme dn2 (puisqu'on cherche, justement, à déterminer ponctuellement cet indice n2).

Dans une telle variante du procédé de spectroscopie discrimante objet de l'invention, le profil optique "différentiel" de l'objet transparent 3 ne permet pas de relier directement les épaisseurs et les indices de réfraction ponctuels de cet objet 3. Néanmoins, on a pu étudier des objets transparents 3 hétérogènes, pour autant que ceux-ci soient biréfringents, ou pour mettre en évidence, au contraire, leur caractère non biréfringent.

Il est décrit maintenant, en référence à la figure 4, une troisième forme d'éxécution du procédé de spectroscopie discriminante, objet de l'invention.

Dans cette variante, on modifie de manière alternative l'indice de réfraction optique n1 du corps transparent 1 portant l'objet transparent 3 sur sa face 2.

A cet effet, on a utilisé un corps transparent 1 formé par un prisme réalisé par croissance d'un cristal électrooptique. On peut aussi tailler ce prisme dans un cristal de même nature.

Soumis à une différence de tension électrique suivant, notamment, ses axes principaux, ce cristal devient biréfringent, avec pour conséquence une variation simultanée de son indice de réfraction optique n1.

Le corps transparent 1 se présente ainsi sous la forme d'une lame transparente 1a , dans laquelle est introduit le rayonnement électromagnétique issu de la source 4. A cet effet, un prisme 1b , ayant la forme d'un quart de cylindre, est en contact par une de ses faces avec la face supérieure 2a de ladite lame 1a . Le rayonnement pénètre dans le prisme 1b par sa paroi cylindrique, et son angle d'incidence fait en sorte qu'il subit une succession de réflexions totales entre les deux faces de ladite lame 1a ; celle-ci se comporte donc comme un guide d'onde planaire. Un prisme 1c , de même géomètrie et de même disposition que le prisme 1b , assure l'extraction dudit rayonnement en dehors de la lame 1a .

La disposition particulière décrite précédemment n'est bien entendu pas limitative, et on connait un grand nombre de pièces optiques du même genre, c'est-à-dire conçues pour qu'un rayonnement électromagnétique y subisse des réflexions internes totales successives.

On comprend qu'en raison des réflexions internes totales du rayonnement électromagnétique issu de la source 4, à l'intérieur de la lame transparente 1a , il apparait un champ évanescent sur le dessus de la face 2a de ladite lame 1a .

Le fonctionnement de la partie du microscope optique en champ évanescent frustré conventionnel, décrit en référence à la figure 1, concerne uniquement l'obtention d'un profil optique "normal" d'un objet transparent 3 déposé sur le dessus d'une face 2 d'un corps transparent 1. Ce fonctionnement de base demeure identique dans la variante du procédé de spectroscopie discriminante décrite ici, la face 2a jouant le rôle de la face 2.

Conformément à cette troisième variante, des électrodes 19a , 19b sont disposées de manière adéquate sur deux faces antagonistes du corps transparent 1. Par application d'une tension électrique variable entre ces électrodes, et selon leur disposition relative par rapport aux axes principaux du corps transparent 1, on induit un effet électrooptique longitudinal ou un effet électroptique transverse dans ledit corps transparent 1, et ce conformément à l'effet Pockels. Dans le cas illustré ici de manière non limitative, 1a lame la constitue, avec ses électrodes 19a et 19b , une cellule de Pockels transverse ; la tension de commande de cette cellule est plus faible que celle d'une cellule longitudinale, et la biréfringence naturelle du cristal utilisé comme corps transparent 1 est d'emblée compensée.

La variation de l'indice de réfraction optique n1 est alors directement proportionnelle à la tension électrique appliquée. Cette tension est fournie par une alimentation électrique 20 annexe, dont la commande est régulée par l'ordinateur 10.

Le cas échéant, en particulier dans le cas où on réalise une cellule de Pockels longitudinale avec la même lame transparente 1a , on dépose, sur la face 2a et sur la face antagoniste 2b de ladite lame 1a , des électrodes se présentant en couches minces transparentes homogènes et constantes ; de cette manière, les électrodes se laissent traverser, sans trop le perturber, par le champ évanescent généré par réflexion interne totale du rayonnement électromagnétique dans ladite lame transparente 1a .

Un matériau convenant bien à cette troisième forme d'éxécution de l'invention est, par exemple, le titanate de barium ($BaTiO_3$). Le quartz ($SiO_2$) convient également, mais la mise en oeuvre dans ce cas est moins avantageuse, du fait de la moindre amplitude de variation de son indice de réfraction optique.

Simultanément à la microscopie de l'objet transparent 3, réalisée de la manière habituelle par asservissement du mouvement vertical de la pointe fine transparente 6, la tension alternative fournie par l'alimentation électrique 20 provoque une variation concomitante de l'indice de réfraction optique n1 du corps transparent 1. Ici encore, la variation électrooptique d'indice est suffisamment faible pour être assimilée à une variation différentielle.

La modulation différentielle dI de l'intensité du champ évanescent frustré n'est jamais nulle, car on fait effectivement, dans tous les cas, varier l'indice de réfraction optique n1 du corps transparent 1. On a donc toujours obtenu un profil optique "différentiel" de l'objet transparent 3, en plus de son profil optique "normal". L'ordinateur 10 est apte à en déduire les épaisseurs et les indices de réfraction ponctuels de cet objet 3.

On notera également que l'on peut combiner sans difficulté la première variante décrite en référence à la figure 2 et la présente variante, en effectuant successivement une variation différentielle de la longueur d'onde, puis une variation différentielle de l'indice de réfraction n1 du corps transparent 1.

Il est enfin décrit, en référence à la figure 5, une quatrième forme d'éxécution d'un microscope optique à balayage en champ évanescent frustré, mettant en oeuvre le procédé de spectroscopie discriminante objet de l'invention.

Dans cette variante, on provoque une variation différentielle dθ de l'angle d'incidence θ du rayonnement électromagnétique utilisé sur la face 2 du corps transparent 1, portant l'objet transparent 3.

Conformément à la figure 5, le corps transparent 1 est un prisme hémicylindrique équipé d'un axe de pivotement 21. Cet axe 21 constitue sensiblement l'axe central dudit prisme. Il est supporté par deux paliers 22 placés de chaque côté du corps transparent 1. Des leviers latéraux 23 sont solidaires dudit corps 1, et de dispositifs de déplacement linéaire 24, pouvant incorporer des cristaux piezo-électriques. Ces dispositifs 24 ont un fonctionnement alternatif commandé par un circuit électronique 25 ; ils provoquent le pivotement du corps transparent 1 autour de son axe 21. Enfin, le circuit électronique 25 est relié à l'ordinateur 10, qui enregistre et traite la variation dθ obtenue, ou, pour le moins, son équivalent électrique.

On a choisi d'opérer une variation en angle dθ qui soit de l'ordre de 1°. A ce titre, l'utilisation d'un prisme hémicylindrique est un avantage certain, par rapport aux prismes présentant des faces d'entrée et de sortie à 45° ou à 60° (ces prismes sont utilisés dans les microscopes en champ évanescent frustré conventionnels). En effet, quelque soit l'angle d'incidence θ, on a toujours un faisceau parallèle dans ce prisme hémicylindrique (en observant que la lentille convergente 5 continue de jouer son rôle).

Il est évident qu'on pourrait réaliser un système de déviation différent, mettant en oeuvre une déviation directe du faisceau lumineux issu de la source 4 ; cette déviation pourrait être obtenue par des miroirs vibrants, ou des dispositifs acousto-optiques convenables.

Avec un corps transparent 1 équipé de la façon explicitée plus haut, on fait aisément varier l'angle d'incidence du faisceau sous la face 2 de ce corps 1 ; on a choisi des dispositifs piezo-électriques 24, car ils sont suffisants pour assurer une variation différentielle dθ de cet angle d'incidence (une variation dθ inférieure ou égale à 1° peut, en effet, être considérée comme une variation différentielle à l'échelle des grandeurs physiques en présence).

La variation dθ provoque une variation concomitante dI de l'intensité I du champ évanescent frustré qui sert à micrographier un objet transparent 3. L'exploitation de la variation dI est identique à l'exploitation qui en est faite dans les variantes précédentes ; l'ordinateur 10 établit donc deux images de l'objet transparent 3, l'une "normale" et l'autre "différentielle", puis calcule ponctuellement la part de l'indice de réfraction optique et celle de l'épaisseur dans les profils optiques mesurés.

En outre, il est important de noter que cette variante du procédé de spectroscopie discriminante, objet de l'invention, peut être mise en oeuvre en même temps que la première variante, et que la troisième variante du même procédé.

Le procédé de spectroscopie discriminante, et les formes d'exécution des microscopes optiques à balayage en champ évanescent frustré, décrits ci-dessus et illustrés en référence aux dessins annexés, doivent être considérés comme des exemples non limitatifs ne réduisant pas la portée de la présente invention. En particulier, la substitution de toute phase du procédé, ou de tout élément technique desdits microscopes, par une phase ou un élément technique équivalent

La présente invention est particulièrement destinée à la microscopie optique à haute résolution par transmission d'objets transparents ne pouvant être métallisés, ou placés sous vide sans modification de leur nature, du type de certains échantillons biologiques, et de certains verres.

**Revendications**

1 - Procédé de spectroscopie discriminante destinée à la microscopie optique à balayage en champ évanescent frustré, du type permettant d'obtenir le profil optique "normal" d'un objet transparent, caractérisé en ce qu'on provoque une variation préférérentiellement différentielle de l'une au moins des grandeurs physiques dont l'intensité I du champ évanescent frustré dépend' à savoir :
- la longueur d'onde λ du rayonnement électromagnétique, orienté sur le dessous d'une face d'un corps transparent, du type d'un prisme, et qui génère, par réflexion interne totale, ledit champ proche,
- l'indice de réfraction optique nl dudit corps transparent,
- l'indice de réfraction optique moyen n2 de l'objet transparent placé sur le dessus de ladite face,

- et l'angle d'incidence θ dudit rayonnement électromagnétique sur ladite face,
de manière à obtenir une variation concomitante dI de ladite intensité I, susceptible d'être interprétée comme un profil optique "différentiel" dudit objet transparent par rapport à l'une au moins desdites grandeurs physiques, ou procurant un profil optique "modifié" dudit profil optique "normal" de cet objet.

2 - Procédé de spectroscopie discriminante suivant la revendication 1, caractérisé en ce qu'on fait varier de manière non linéaire la lonqueur d'onde λ du rayonnement électromagnétique, orienté sur le dessous de la face du corps transparent, où il génère, par réflexion interne totale, le champ proche.

3 - Procédé de spectroscopie discriminante suivant la revendication 1, caractérisé en ce qu'on provoque une variation différentielle de l'indice de réfraction optique moyen n2 de l'objet transparent supporté par le corps transparent, en stimulant la biréfringence naturelle dudit objet transparent, ou de ses composants.

4 - Procédé de spectroscopie discriminante suivant la revendication 3, caractérisé en ce qu'on stimule la biréfringence naturelle de l'objet transparent, ou de ses composants, en faisant tourner alternativement la polarisation du rayonnement électromagnétique générant le champ proche, avant son entrée dans le corps transparent supportant ledit objet transparent.

5 - Procédé de spectroscopie discriminante suivant la revendication 1, caractérisé en ce qu'on provoque une variation différentielle de l'indice de réfraction optique n1 du corps transparent supportant l'objet transparent à étudier, en induisant une biréfringence optique dans ledit corps transparent.

6 - Procédé de spectroscopie discriminante suivant la revendication 5, caractérisé en ce qu'on induit une biréfringence optique dans le corps transparent supportant l'objet transparent à étudier, par un effet électrooptique.

7 - Procédé de spectroscopie discriminante suivant la revendication 1, caractérisé en ce qu'on provoque une variation différentielle dθ de l'angle d'incidence θ, en faisant pivoter le corps transparent, supportant sur une de ses faces l'objet transparent à étudier, autour d'un axe se trouvant sensiblement dans le plan de ladite face..

8 - Microscope optique à balayage en champ évanescent frustré, permettant d'établir par transmission le profil optique "normal" d'un corps transparent (3), du type comportant :
- une source (4) d'un rayonnement électromagnétique favorablement monochromatique, générant, par réflexion interne totale sur une face (2) d'un corps transparent (1), du type d'un prisme, un champ évanescent au dessus de ladite face (2),
- une sonde optique, du type de l'extrémité étirée d'une fibre optique (7), cette sonde étant placée dans ledit champ évanescent de manière à le fruster, et à permettre à un moyen de déplacement vertical, présentant une résolution au moins nanomètrique, du type d'un tube piezo-électrique (12), d'asservir sa position verticale, cet asservissement étant contrôlé au moyen d'une régulation opérée sur l'intensité du champ évanescent frustré, qui est recueillie, à cet effet, par un photodétecteur (8) approprié,
- un moyen de déplacement latéral de ladite sonde optique, présentant une résolution au moins nanométrique, et pouvant avantageusement être constitué par ledit tube piezo-électrique (12),
- et un moyen d'enregistrement et de traitement des positions successives de cette sonde, tel un ordinateur (10),
ce microscope étant caractérisé en ce qu'il met en oeuvre le procédé de spectroscopie discriminante conforme à l'une quelconque des revendications précédentes.

9 - Microscope optique conforme à la revendication 8, caractérisé en ce qu'il comporte au moins un modulateur de fréquence optique (13), intercalé sur le trajet du rayonnement électromagnétique générant le champ évanescent, avant son entrée dans le corps transparent (1) supportant, sur sa face (2), l'objet transparent (3) à étudier.

10 - Microscope optique conforme à la revendication 9, caractérisé en ce que le modulateur de fréquence optique (13) comprend au moins un cristal électrooptique non linéaire, qu'une alimentation électrique (15) soumet à une tension alternative suivant l'un quelconque de ses axes principaux.

11 - Microscope optique conforme à la revendication 10, caractérisé en ce qu'il comporte au moins un circuit auxilliaire (16) prélevant un échantillon de la tension alternative fournie par l'alimentation électrique (15), cet échantillon, représentatif de la variation différentielle dλ de la longueur d'onde λ du rayonnement électromagnétique issu de la source (4), étant traité par l'ordinateur (10) qui établit le profil optique "différentiel" de l'objet transparent (3) soumis à l'étude, par combinaison de ladite variation différentielle dλ, et de la variation différentielle dI de l'intensité I du champ évanescent frustré en résultant.

12 - Microscope optique conforme à la revendication 8, caractérisé en ce qu'il comporte au moins un dispositif polarisant (17) faisant tourner rapidement la polarisation du rayonnement électromagnétique générant le champ évanescent.

13 - Microscope optique conforme à la revendication 12, caractérisé en ce que le dispositif polarisant (17) est intercalé sur le trajet du rayonnement électromagnétique générant le champ évanescent, avant son

10

entrée dans le corps transparent (1) supportant, sur sa face (2), l'objet transparent (3) à étudier.

14 - Microscope optique conforme à la revendication 8, caractérisé en ce que le corps transparent (1), supportant l'objet transparent (3) soumis à l'étude, est un cristal électro-optique, dont on fait alternativement varier l'indice de réfraction optique n1 au moyen d'une tension alternative appliquée sur deux électrodes (19a , 19b ) disposées, à cet effet, sur des faces antagonistes dudit corps transparent (1).

15 - Microscope optique conforme à la revendication 14, caractérisé en ce que la tension alternative appliquée sur les électrodes (19a , 19b ) est fournie par une alimentation électrique (20) régulée par l'ordinateur (10).

16 - Microscope optique conforme à la revendication 8, caractérisé en ce que, d'une part, le corps transparent (1), supportant l'objet transparent (3) soumis à l'étude, est équipé d'un axe de pivotement (21) maintenu sur le côté dudit corps (1) par deux paliers (22), et d'autre part, des leviers latéraux (23), solidaires du corps transparent (1) et de dispositifs de déplacement linéaire (24) à fonctionnement alternatif, provoquent le pivotement dudit corps (1) autour dudit axe de pivotement (21).

17 - Microscope optique conforme à la revendication 16, caractérisé en ce qu'un circuit électronique (25), relié à l'ordinateur (10), commande le fonctionnement alternatif des dispositifs de déplacement linéaire (24).

*Fig 1*

EP 0 426 559 A1

*Fig 2*

_Fig 3_

*Fig 4*

_Fig 5a_

_Fig 5b_

**Office européen
des brevets**

**RAPPORT DE RECHERCHE
EUROPEENNE**

Numéro de la demande

**EP 90 40 3070**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PROCEEDINGS OF THE SPIE, vol. 1139: OPTICAL STORAGE AND SCANNING TECHNOLOGY, Paris, 25-26 avril 1989, pages 77-85, SPIE, Bellingham, WA, US; F. DE FORNEL et al.: "An evanescent field optical microscope" * Pages 77-85; figures 3-4 * | 1,8 | G 01 N 21/41 G 02 B 27/56 |
| A | OPTICS COMMUNICATIONS, vol. 71, nos. 1,2, 1 mai 1989, pages 23-28, Amsterdam, NL; D. COURJON et al.: "Scanning tunneling optical microscopy" * Pages 23-25 * | 1,8 | |
| A | OPTICS COMMUNICATIONS, vol. 59, no. 5,6, 1 octobre 1986, pages 361-365, Amsterdam, NL; K. ODA et al.: "Instantaneous observation of angular scan-attenuated total reflection spectra" * Pages 361-362 * | 1,7 | |

|  |
|---|
| **DOMAINES TECHNIQUES RECHERCHES (Int. Cl.5)** |
| G 01 N 21/41 G 01 N 21/55 G 02 B 21/00 G 02 B 27/56 |

Le présent rapport de recherche a été établi pour toutes les revendications

| Lieu de la recherche | Date d'achèvement de la recherche | Examinateur |
|---|---|---|
| La Haye | 06 février 91 | BOEHM CH.E.D. |